# EUROPEAN PATENT SPECIFICATION

(11) **EP 2 445 188 B1**
(45) Date of publication and mention of the grant of the patent: **27.07.2016**
(21) Application number: 09846064.5
(22) Date of filing: 21.12.2009
(51) Int. Cl.: H04M 11/00, H04M 3/22, H04M 3/523, H04M 3/51

(54) **CUSTOMER SERVICE SYSTEM AND CROSS-PLATFORM MONITORING METHOD THEREOF**
KUNDENDIENSTSYSTEM UND PLATTFORMÜBERGREIFENDES ÜBERWACHUNGSVERFAHREN DAFÜR
SYSTÈME DE SERVICE CLIENT ET PROCÉDÉ DE SURVEILLANCE DE MULTIPLATEFORME CORRESPONDANT

(30) Priority: 19.06.2009 CN 200910147765
(43) Date of publication of application: 25.04.2012
(73) Proprietor: ZTE Corporation, Shenzhen, Guangdong 518057 (CN)
(72) Inventor: CHEN, Xianbin, Shenzhen Guangdong 518057 (CN)
(74) Representative: Bittner, Bernhard
(86) International application number: PCT/CN2009/075803
(87) International publication number: WO 2010/145150

(56) References cited:
- WO-A1-99/17522
- CN-A- 101 415 048
- Cisco Systems: "Unified Contact Center Enterprise Desktop", , 29 October 2008 (2008-10-29), XP002694500, Retrieved from the Internet: URL:http://web.archive.org/liveweb/http:// www.cisco.com/en/US/docs/voice_ip_comm/cus t_contact/contact_center/ipcc_enterprise/s rnd/7x/c7desktp.pdf [retrieved on 2013-03-25]

## Description

### TECHNICAL FIELD

The present invention relates to a communications technology, in particular to a customer service system and a cross-platform monitoring method thereof.

### BACKGROUND

A customer service system, also called a call center, is a comprehensive information service system based on Computer Telecommunication Integration (CTI) technology which makes full use of the integration of various functions of a communication network and a computer network and is connected with enterprises as a whole, and it is a dedicated system through which a group of agents or representatives of a company process incoming calls, make calls and contact consumers centralizedly. The call center can supply various services to users, such as telephone, fax, E-mail and the like, and is mainly arranged to deal with requirements, questions, complains, suggestions, interrogatories, etc. that are advanced by users to enterprises, such as 10000 in the telecommunications industry, and 95555 in the financial industry, etc.

At present, a Next Generation Call Center (NGCC) which is based on a Next Generation Network (NGN) is usually based on a single-call control platform; with the increasing of calls and the market demand on high reliability, double-platform or multi-platform call centers have appeared. In the prior art, the sniffer or call cut-in by agents on a single platform or multi-call platforms is carried out in this manner: in normal operation, a plurality of platforms are independent, each of which deals with affairs of its own respectively; agents from two platforms have no contact and can not communicate with or learn from each other; each platform is required to be provided with an agent monitoring device, which is inconvenient for uniform arrangement and monitoring and causes waste of device resources and human resources; besides, messages can not be shared conveniently.

An agent monitoring process in an existing customer service system is as follows: a monitor agent sends a request to a CTI when requiring to perform sniffer and call cut-in on a speaking agent on the same platform; the CTI calls up the monitor agent and connects the monitor agent to the current conversation according to the registration information of the monitor agent, so that the monitor agent achieves the sniffer and call cut-in on the agents.

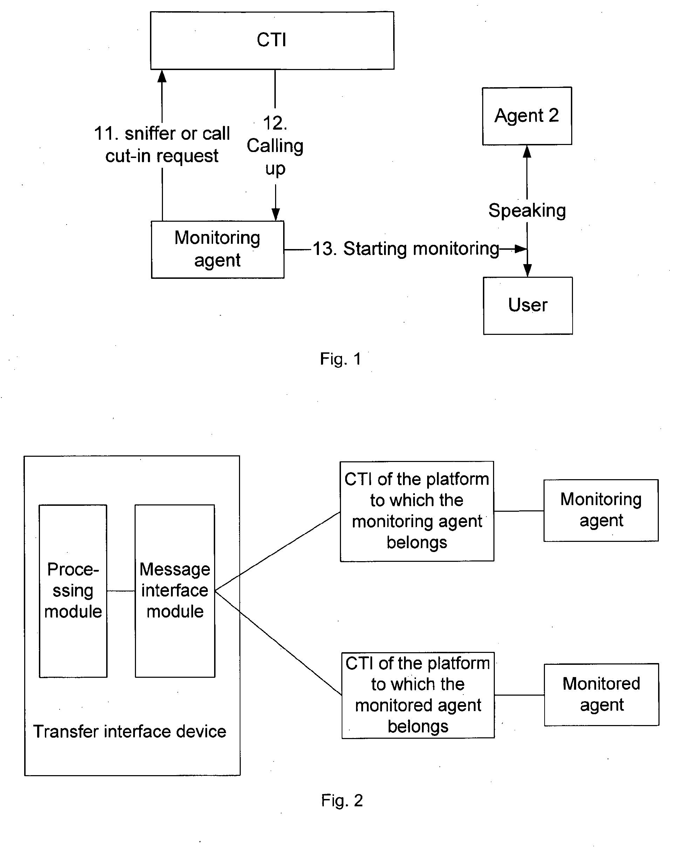

Fig. 1 is a process diagram of sniffer or call cut-in performed by a monitor agent in a customer service system of the prior art. As shown in Fig. 1, agents on the same platform can be monitored, and a monitoring agent can perform real-time sniffer and call cut-in on an agent 2 in service and communicates with the agent 2 in service. The monitoring steps are as follows:
step 11: the monitoring agent sends a sniffer or call cut-in request to the CTI, requiring for performing sniffer or call cut-in on the speaking agent 2;
step 12: after receiving the request, the CTI calls up the monitoring agent; and
step 13: the monitoring agent is added into the calling of the speaking agent 2, and the monitor joins the conversation, so that the sniffer or call cut-in on the speaking agent 2 is realized.

When the prior operation mode among agents is applied under the situation of a plurality of customer service platforms, the following defects may exist:
since a plurality of call control platforms (for convenient description, "call control platform" is called as "platform" for short hereinafter) are used, agents on different platforms have no contact with each other, and a monitor agent can not perform cross-platform monitoring, communicating and suggesting, so that supporting resources and device resources for implementation of monitoring, communicating and the like are required to be arranged on each platform, thereby causing waste of network resources and human resources and being disadvantageous to uniform arrangement. High equipment of the call control platforms also means high cost; and that agents on the plurality of platforms can not operate one another also causes unsmooth information communication and transmission among the agents.

The features of the preamble of the independent claim are known from the following document: Cisco Systems: "Unified Contact Center Enterprise Desktop", October 2008 (2008-10-29) discloses a system for handling Remote Silent Monitoring (RSM) by using PG/CTIOS servers and RSM server between supervisors and agents.

### SUMMARY OF THE INVENTION

In view of this, the present invention mainly aims to provide a customer service system and a cross-platform monitoring method thereof, which can solve the problem that an existing customer service system can not enable call cut-in among agents on different platforms under a multi-platform mode.

In order to achieve the purpose above, the technical scheme of the present invention provides a customer service system which comprises a monitoring agent, a transfer interface device and a monitored agent; the monitoring agent and the monitored agent belongs to different call control platforms, wherein the monitoring agent is arranged for sending a monitoring request message to the transfer interface device through a Computer Telecommunication Integration (CTI) of a platform to which the monitoring agent itself belongs and cutting in a current conversation of the monitored agent after the CTI of the platform to which the monitoring agent itself belongs receives a monitoring response message from a CTI of a platform to which the monitored agent belongs; the transfer interface device is arranged for converting the received monitoring request message into a format acceptable to the CTI of the second platform and forwarding the converted monitoring request message to the CTI of the platform to which the monitored agent belongs and for forwarding the monitoring response message sent by the CTI of the platform to which the monitored agent belongs to the CTI of the platform to which the monitoring agent belongs; and the monitored agent is arranged for receiving the monitoring request message coming from the monitoring agent from the transfer interface device through the CTI of the platform to which the monitored agent belongs, and returning the monitoring response message to the transfer interface device; wherein the monitoring agent and the monitored agent are further arranged for being registered on the transfer interface device through the CTIs of the platforms to which the monitoring agent and the monitored agent belong respectively and establishing a link respectively with the transfer interface device before the monitoring agent sends the monitoring request message; and the CTI of the platform to which the monitored agent itself belongs initiating a call to the monitoring agent through a process which simulates the process that an external user makes a call after the monitoring agent sends the monitoring request message.

Specifically, the transfer interface device may comprise a message interface module and a processing module; the message interface module is arranged for receiving the monitoring request message from the monitoring agent sent through the CTI of the platform to which the monitoring agent itself belongs, sending the received monitoring request message to the processing module, forwarding the monitoring request message processed by the processing module to the CTI of the platform to which the monitored agent belongs, and forwarding the monitoring response message sent by the CTI of the platform to which the monitored agent belongs to the CTI of the platform to which the monitoring agent belongs; and the processing module is arranged for converting the received monitoring request message into a format acceptable to the CTI of the second platform and sending the converted monitoring request message to the message interface module.

The link between the transfer interface device and the CTI of the platform to. which the monitoring agent belongs or the CTI of the platform to which the monitored agent belongs may be guaranteed in normal state through a handshake message.

The monitoring request message may be a call cut-in request message.

The technical scheme of the present invention further provides a cross-platform communication method which comprises the steps as follows:
A. registering the CTI of the platform to which the monitoring agent belongs and the CTI of the platform to which the monitored agent belongs respectively on the transfer interface device and establishing a link between the transfer interface device and the CTIs respectively; sending a monitoring request message from a monitoring agent to a transfer interface device through a Computer Telecommunication Integration (CTI) of a platform to which the monitoring agent itself belongs, wherein the monitoring request message is a sniffer request message or a call cut-in request message;
B. converting the monitoring request message into a format acceptable to the CTI of the second platform and forwarding the processed monitoring request message to a CTI of a platform to which the monitored agent belongs by the transfer interface device, wherein the monitoring agent and the monitored agent belong to different call control platforms; calling up the monitoring agent by the CTI of the platform to which the monitored agent belongs; and after the call succeeds, returning a calling success message by the monitoring agent to the CTI of the platform to which the monitored agent belongs, and establishing a monitoring channel between the monitoring agent and the monitored agent; and
C. cutting in a current conversation being held by the monitored agent by the monitoring agent after the CTI of the platform to which the monitoring agent belongs receives a monitoring response message sent by the CTI of the platform to which the monitored agent belongs and forwarded by the transfer interface device.

The link between the transfer interface device and the CTI of the platform to which the monitoring agent belongs or the CTI of the platform to which the monitored agent belongs may be guaranteed in normal state through a handshake message.

The process of calling up the monitoring agent by the CTI of the platform to which the monitored agent belongs may specifically comprise:
communicating with a core network and requiring to call up the monitoring agent by the CTI of the platform to which the monitored agent belongs according to an access code of the platform to which the monitoring agent belongs; transferring the call to the CTI of the platform to which the monitoring agent belongs after number analysis by the core network; and calling up the monitoring agent by the CTI of the platform to which the monitoring agent belongs according to the requirement of the CTI of the platform to which the monitored agent belongs.

The process of calling up the monitoring agent by the CTI of the platform to which the monitored agent belongs may specifically comprise: directly calling up the monitoring agent by the CTI of the platform to which the monitored agent belongs according to address port information of the monitoring agent contained in the monitoring request message.

The monitoring request message may be a call cut-in request message. Compared with the prior art, the present invention has the advantageous effects as follows:
the present invention can realize call cut-in between agents from different platforms in a multi-platform mode of the customer service system and guarantee that monitoring, study and other facilities arranged on one platform can be applied to a plurality of platforms, and monitoring devices can be arranged uniformly, so that cost is reduced, network resources and agent resources are saved, and moreover, the agents can communicate with and learn from one another more easily.

### BRIEF DESCRIPTION OF THE DRAWINGS

Fig. 1 is a process diagram of sniffer or call cut-in performed by a monitor agent in a customer service system of the prior art;
Fig. 2 is a structure diagram of a customer service system provided by the present invention;
Fig. 3 is a schematic diagram of a monitoring process according to the first embodiment of a method provided by the present invention; and
Fig. 4 is a flow diagram of monitoring according to the second embodiment of the method provided by the present invention.

### DETAILED DESCRIPTION OF THE INVENTION

In order to help common technical personnel in the field understand and implement the present invention, the specific implementation process of the present invention is described in detail below in combination with the figures.

In order to solve the problem that an existing customer service system can not enable sniffer and call cut-in between agents from different platforms in a multi-platform mode, the present invention is characterized in that a transfer interface device is added to the existing customer service system and is arranged for establishing a connection with each CTI of each platform of the multiple platforms and for analytically processing and forwarding a sniffer request, a call cut-in request or other requests coming from different platforms. In order to realize cross-platform communication, it is further required to provide an interface with the transfer interface device on the CTI of each platform, wherein the interface is arranged for sending or receiving a registration and handshake message, a sniffer or call cut-in request message, a monitoring response message and the like.

As shown in Fig. 2, the present invention provides a customer service system which comprises a monitoring agent, a transfer interface device (i.e. Interface-Working, IW) and a monitored agent, wherein the monitoring agent and the monitored agent belongs to different call control platforms; the monitoring agent is arranged for sending a monitoring request message to the transfer interface device through the CTI of the platform to which the monitoring agent itself belongs and joining a current conversation of the monitored agent after the CTI of the platform to which the monitoring agent itself belongs receives a monitoring response from the CTI of the platform to which the monitored agent belongs; the transfer interface device is arranged for analytically processing the received monitoring request message and forwarding the processed monitoring request message to the CTI of the platform to which the monitored agent belongs, and for forwarding the monitoring response message sent by the CTI of the platform to which the monitored agent belongs to the CTI of the platform to which the monitoring agent belongs. The transfer interface device can adopt a PC or a minicomputer, which depends on the specific implementation situation.

The transfer interface device comprises a message interface module and a processing module. The message interface module is arranged for receiving the monitoring request messages from the CTIs of the platforms, sending the received monitoring request messages to the processing module, forwarding the monitoring request messages processed by the processing module to different CTIs, and forwarding the monitoring response messages sent by the CTIs of the platforms to which the monitored agents belong to the CTIs of the platforms to which the monitoring agents belong, the standard Transmission Control Protocol (TCP) can be used for the receiving and sending of messages; the processing module is arranged for analytically processing the monitoring request messages received by the message interface module and sending the processed monitoring request messages to the message interface module. Messages transmitted between the transfer interface device and the call control platforms further include registration and handshake messages, monitoring response messages, etc.

The transfer interface device works in the following way: after call control platforms are registered successfully on the transfer interface device, the transfer interface device will store the information of the CTIs of the registered platforms; the sniffer or call cut-in request message of the monitoring agent is sent to the message interface module of the transfer interface device through the CTI of the platform to which the monitoring agent belongs, then analytically processed by the processing module of the transfer interface device and forwarded to the CTI of the platform to which the monitored agent belongs by the message interface module of the transfer interface device, and responded by the CTI of the platform to which the monitored agent belongs.

The present invention also provides a cross-platform monitoring method of the customer service system, which can achieve the function of sniffer and call cut-in between agents from different platforms in a multi-platform mode of the customer service system. The method includes the following steps: a monitoring agent sends a monitoring request message to a transfer interface device through a CTI of a platform to which the monitoring agent itself belongs, wherein the monitoring request message may be a sniffer request message or a call cut-in request message; the transfer interface device sends the monitoring request message to a CTI of a platform to which a monitored agent belongs, wherein the monitoring agent and the monitored agent belong to different call control platforms; and after the CTI of the platform to which the monitoring agent belongs receives a monitoring response message sent by the CTI of the platform to which the monitored agent belongs and forwarded by the transfer interface device, the monitoring agent joins the current conversation being held by the monitored agent.

Preferably, the CTI of the platform to which the monitoring agent belongs and the CTI of the platform to which the monitored agent belongs are respectively registered on the transfer interface device and a link is established respectively with the transfer interface device. After that, the link between the transfer interface device and the CTI of the platform to which the monitoring agent belongs or the CTI of the platform to which the monitored agent belongs is guaranteed in normal state through a handshake message.

The cross-platform monitoring method of the customer service system provided by the present invention will be further illuminated in detail below through two specific embodiments.

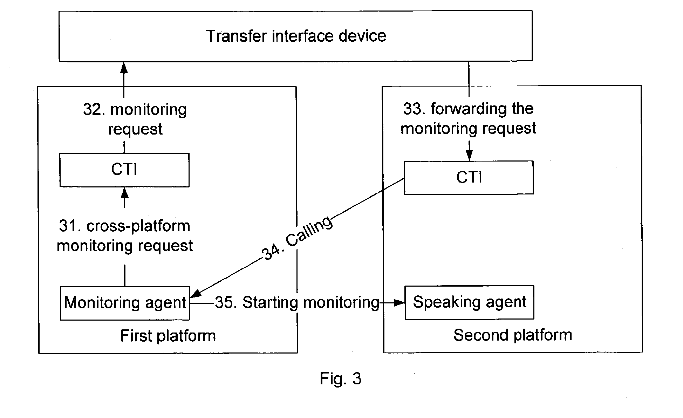

Fig. 3 is a schematic diagram of a monitoring process according to the first embodiment of the method provided by the present invention; this figure describes a process that a monitoring agent on a first platform performs sniffer or call cut-in on a certain speaking agent on a second platform, mainly including the following steps.

Step 31: the monitoring agent on the first platform sends a sniffer or call cut-in request message to the CTI of the first platform.

Step 32: the CTI of the first platform forwards the sniffer or call cut-in request message to the message interface module of the transfer interface device.

Step 33: the sniffer or call cut-in request message is analytically processed by the processing module of the transfer interface device and then the processed message is sent to the CTI of the second platform by the message interface module of the transfer interface device.

Step 34: the CTI of the second platform starts calling up the monitoring agent after receiving the sniffer or call cut-in request, the calling process including:
(1) the CTI of the second platform communicates with a core network and requests to call up the monitoring agent on the first platform according to an access code of the first platform, and the calling process is similar to the process that a user accesses the first platform through an access code;
(2) the core network transfers the call to the CTI of the first platform after number analysis; and the CTI of the first platform receives the request for calling up the monitoring agent; and
(3) the CTI of the first platform calls up the monitoring agent according to the requirement of the CTI of the second platform; and a monitoring channel is established between the monitoring agent and a speaking agent on the second platform.

The calling process can also be:
(1) the CTI of the second platform directly calls up the monitoring agent to join a conversation according to an address port of the monitoring agent or other relevant information contained in a sniffer or call cut-in request message; and
(2) the monitoring agent on the first platform receives and answers the call, and a monitoring channel is established between the monitoring agent and a speaking agent on the second platform.

Step 35: the monitoring agent realizes the cross-platform sniffer or call cut-in on the speaking agent.

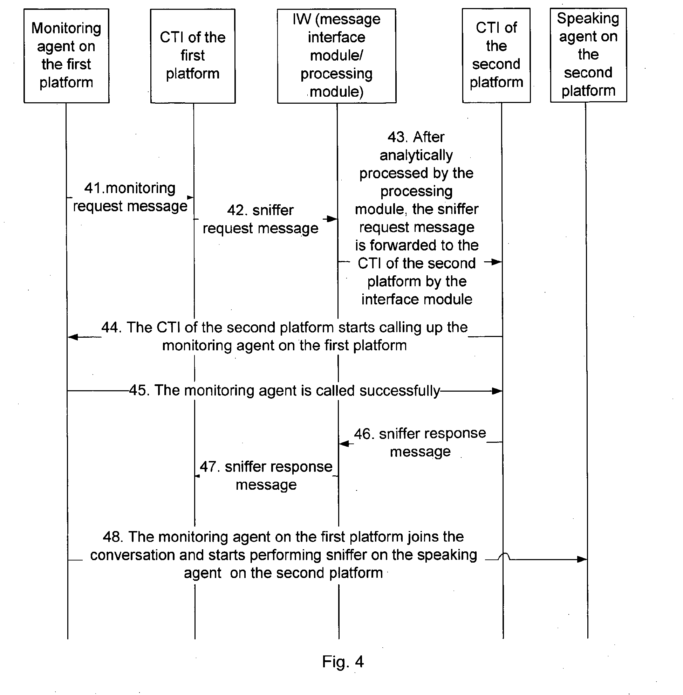

Fig. 4 is a flow diagram of monitoring according to the second embodiment of the method provided by the present invention, wherein the customer service system comprises a plurality of call control platforms, one is a first platform, and another is a second platform; the agents on the first platform and the second platform are arranged and managed uniformly by a monitoring agent, so that resources can be saved. A transfer interface device is arranged in the customer service system, comprising a message interface module and a processing module which are arranged for forwarding and analytically processing the messages among the plurality of platforms. Meanwhile, the CTIs of the plurality of platforms are respectively provided with interfaces connecting with the transfer interface device, and the interfaces can be arranged for receiving registration and handshake messages, sniffer or call cut-in request messages, monitoring response messages and the like. The CTIs of both the first platform and the second platform are successfully registered on the transfer interface device, and the links between the transfer interface device and the CTIs of both the platforms are in normal state.

In this embodiment, the process that the monitoring agent on the first platform monitors a certain speaking agent on the second platform mainly includes the following steps:
step 41: the monitoring agent on the first platform sends a monitoring request message to the CTI of the first platform itself so as to monitor the speaking agent on the second platform holding the conversation, namely the monitored agent;
step 42: the CTI of the first platform analyzes the monitoring request message and sends the sniffer request to the transfer interface device after packing the monitoring request;
step 43: after receiving the monitoring request message, the transfer interface device analytically processes the received monitoring request message, converts the message into a format acceptable to the CTI of the second platform, and sends the processed message after packaged to the CTI of the second platform; and after receiving the monitoring request message forwarded by the transfer interface device, the CTI of the second platform analyzes the monitoring request message, knowing that the request message is a cross-platform monitoring request message;
step 44: the CTI of the second platform initiates a call to the monitoring agent on the first platform through a process which simulates the process that an external user makes a call; the CTI of the second platform may call up the monitoring agent on the first platform through a core network or directly call up the monitoring agent on the first platform according to the network address and network port of the monitoring agent on the first platform instead of through the core network.
step 45: after called successfully, the monitoring agent on the first platform returns a calling success message to the CTI of the second platform; at the time, a monitoring channel between the monitoring agent on the first platform and the monitored agent on the second platform is established;
step 46: the CTI of the second platform returns a monitoring response message to the transfer interface device;
step 47: the transfer interface device forwards the monitoring response message to the CTI of the first platform; and
step 48: the monitoring agent on the first platform joins the conversation being held by the speaking agent on the second platform, thereby realizing the sniffer and call cut-in on the cross-platform agent.

Through the steps above, the monitoring agent can monitor a speaking agent in a sniffer manner. Under this circumstance, a speaking agent do not know that it is monitored, and the monitoring agent can know real-time conversation details of the cross-platform speaking agent; and the monitoring agent can also join the conversation being held by the speaking agent in a call cut-in manner, in this case the monitoring agent can provide suggestion and help for the speaking agent.

Comparing with monitoring by a monitoring agent on an inside-platform speaking agent in the prior art, the present invention realizes the monitoring by a monitoring agent on a cross-platform speaking agent by adding a transfer interface device, so that the monitoring device arranged on one platform can be applied to a plurality of platforms, thus the device cost is reduced greatly, and agents can communicate with and learn from one another more easily.

## Claims

1. A customer service system, comprising: a monitoring agent, a transfer interface device and a monitored agent, the monitoring agent and the monitored agent belonging to different call control platforms, wherein
the monitoring agent is arranged for sending (step 41) a monitoring request message to the transfer interface device through a Computer Telecommunication Integration (CTI) of a platform to which the monitoring agent itself belongs and cutting in (step 48) a current conversation being held by the monitored agent after the CTI of the platform to which the monitoring agent itself belongs receives a monitoring response message sent from a CTI of a platform to which the monitored agent belongs;
the transfer interface device is arranged for converting (step 43) the received monitoring request message into a format acceptable to the CTI of the second platform, forwarding (step 43) the converted monitoring request message to the CTI of the platform to which the monitored agent belongs, and forwarding the monitoring response message sent from the CTI of the platform to which the monitored agent belongs to the CTI of the platform to which the monitoring agent belongs; and
the monitored agent is arranged for receiving the monitoring request message coming from the monitoring agent from the transfer interface device through the CTI of the platform to which the monitored agent itself belongs and returning the monitoring response message to the transfer interface device;
wherein the monitoring agent and the monitored agent are further arranged for being registered on the transfer interface device through the CTIs of the platforms to which the monitoring agent and the monitored agent belong respectively and establishing a link respectively with the transfer interface device before the monitoring agent sends the monitoring request message; and the CTI of the platform to which the monitored agent itself belongs initiating (step 44) a call to the monitoring agent through a process which simulates the process that an external user makes a call after the monitoring agent sends the monitoring request message.

2. The customer service system according to claim 1, wherein the transfer interface device comprises a message interface module and a processing module,
wherein
the message interface module is arranged for receiving (step 42) the monitoring request message from the monitoring agent sent through the CTI of the platform to which the monitoring agent itself belongs, sending the received monitoring request message to the processing module, forwarding (step 43) the monitoring request message processed by the processing module to the CTI of the platform to which the monitored agent belongs, and forwarding the monitoring response message sent by the CTI of the platform to which the monitored agent belongs to the CTI of the platform to which the monitoring agent belongs; and
the processing module is arranged for converting (step 43) the received monitoring request message into a format acceptable to the CTI of the second platform and sending the converted monitoring request message to the message interface module.

3. The customer service system according to claim 1, wherein the link between the transfer interface device and the CTI of the platform to which the monitoring agent belongs or the CTI of the platform to which the monitored agent belongs is guaranteed in normal state through a handshake message.

4. The customer service system according to claim 1 or 2, wherein the monitoring request message is a call cut-in request message.

5. A cross-platform monitoring method of a customer service system, comprising:
A. registering the CTI of the platform to which the monitoring agent belongs and the CTI of the platform to which the monitored agent belongs respectively on the transfer interface device and establishing a link between the transfer interface device and the CTIs respectively; sending (step 41) a monitoring request message from a monitoring agent to a transfer interface device through a Computer Telecommunication Integration (CTI) of a platform to which the monitoring agent itself belongs;
B. converting (step 43) the monitoring request message into a format acceptable to the CTI of the second platform and forwarding the processed monitoring request message to a CTI of a platform to which the monitored agent belongs by the transfer interface device, wherein the monitoring agent and the monitored agent belong to different call control platforms; calling (step 44) up the monitoring agent by the CTI of the platform to which the monitored agent belongs; and
after the call succeeds, returning a calling success message by the monitoring agent to the CTI of the platform to which the monitored agent belongs, and establishing (step 45) a monitoring channel between the monitoring agent and the monitored agent;
C. cutting in (step 48) a current conversation being held by the monitored agent by the monitoring agent after the CTI of the platform to which the monitoring agent belongs receives a monitoring response message sent by the CTI of the platform to which the monitored agent belongs and forwarded by the transfer interface device.

6. The method according to claim 5, wherein the link between the transfer interface device and the CTI to which the monitoring agent belongs or the CTI to which the monitored agent belongs is guaranteed in normal state through a handshake message.

7. The method according to claim 5, wherein the process of calling up the monitoring agent by the CTI of the platform to which the monitored agent belongs specifically comprises:
communicating (step 34 (1)) with a core network and requiring to call up the monitoring agent by the CTI of the platform to which the monitored agent belongs according to an access code of the platform to which the monitoring agent belongs;
transferring (step 34 (2)) the call to the CTI of the platform to which the monitoring agent belongs after number analysis by the core network; and
calling (step 34 (3)) up the monitoring agent by the CTI of the platform to which the monitoring agent belongs according to the requirement of the CTI of the platform to which the monitored agent belongs.

8. The method according to claim 5, wherein the process of calling up the monitoring agent by the CTI of the platform to which the monitored agent belongs specifically comprises:
directly calling up the monitoring agent by the CTI of the platform to which the monitored agent belongs according to address port information of the monitoring agent contained in the monitoring request message.

9. The method according to claim 5, wherein the monitoring request message is a call cut-in request message.

## Patentansprüche

1. Kundendienstsystem umfassend: einen Überwachungsagent, eine Übertragungsschnittstellenvorrichtung und einen überwachten Agent, wobei der Überwachungsagent und
der überwachte Agent zu unterschiedlichen Anrufsteuerungsplattformen gehören, wobei
der Überwachungsagent angeordnet ist, um eine Überwachungsanfragenachricht an die Übertragungsschnittstellenvorrichtung durch eine Computer-Telekommunikation-Integration (CTI) einer Plattform zu senden (Schritt 41), zu welcher der Überwachungsagent selbst gehört und um eine aktuelle Unterhaltung zuzuschalten (Schritt 48), welche durch den überwachten Agent gehalten ist nachdem die CTI der Plattform, zu welcher
der Überwachungsagent selbst gehört, eine Überwachungsantwortnachricht empfängt, welche von einer CTI einer Plattform gesendet wurde, zu welcher der überwachte Agent gehört;
die Übertragungsschnittstellenvorrichtung angeordnet ist, um die empfangene Überwachungsanfragenachricht in ein Format zu konvertieren (Schritt 43), welches für die CTI der zweiten Plattform zulässig ist, um die umgewandelte Überwachungsanfragenachricht an die CTI der Plattform weiterzuleiten (Schritt 43), zu welcher der überwachte Agent gehört und um die Überwachungsantwortnachricht, welche von der CTI der Plattform gesendet wurde, zu welcher der überwachte Agent gehört, an die CTI der Plattform weiterzuleiten, zu welcher der Überwachungsagent gehört; und
der überwachte Agent angeordnet ist, um die Überwachungsanfragenachricht zu empfangen, welche von dem Überwachungsagent von der Übertragungsschnittstellenvorrichtung durch die CTI der Plattform kommt, zu welcher der überwachte Agent selbst gehört und um die Überwachungsantwortnachricht an die Übertragungsschnittstellenvorrichtung zurückzusenden;
wobei der Überwachungsagent und der überwachte Agent weiter angeordnet sind, um auf der Übertragungsschnittstellenvorrichtung durch die CTIs der Plattformen registriert zu werden, zu welchen der Überwachungsagent beziehungsweise der überwachte Agent gehören und um jeweils eine Verbindung mit der Übertragungsschnittstellenvorrichtung herzustellen, bevor der Überwachungsagent die Überwachungsanfragenachricht sendet; und die CTI der Plattform, zu welcher der überwachte Agent selbst gehört, einen Anruf an den Überwachungsagent durch einen Prozess initiiert (Schritt 44), welcher den Prozess simuliert, dass ein externer Anwender einen Anruf tätigt, nachdem der Überwachungsagent die Überwachungsanfragenachricht sendet.

2. Kundendienstsystem nach Anspruch 1, wobei die Übertragungsschnittstellenvorrichtung ein Nachrichtenschnittstellenmodul und ein Verarbeitungsmodul umfasst, wobei das Nachrichtenschnittstellenmodul angeordnet ist, um die Überwachungsanfragenachricht von dem Überwachungsagent zu empfangen (Schritt 42), welche durch die CTI der Plattform gesendet wurde, zu welcher der Überwachungsagent selbst gehört, um die empfangene Überwachungsanfragenachricht an das Verarbeitungsmodul zu senden, um die Überwachungsanfragenachricht, welche durch das Verarbeitungsmodul verarbeitet wurde an die CTI der Plattform weiterzuleiten (Schritt 43), zu welcher der überwachte Agent gehört, und um die Überwachungsantwortnachricht, welche durch das CTI der Plattform gesendet wurde, zu welcher der überwachte Agent gehört, an die CTI der Plattform weiterzuleiten, zu welcher der Überwachungsagent gehört; und
das Verarbeitungsmodul angeordnet ist, um die empfangene Überwachungsanfragenachricht in ein Format zu konvertieren (Schritt 43), welches für die CTI der zweiten Plattform zulässig ist und um die konvertierte Überwachungsanfragenachricht an das Nachrichtenschnittstellenmodul zu senden.

3. Kundendienstsystem nach Anspruch 1, wobei die Verbindung zwischen der Übertragungsschnittstellenvorrichtung und der CTI der Plattform, zu welcher der Überwachungsagent gehört oder der CTI der Plattform, zu welcher der überwachte Agent gehört, in einem normalen Zustand durch eine Handshake-Nachricht sichergestellt ist.

4. Kundendienstsystem nach Anspruch 1 oder 2, wobei die Überwachungsanfragenachricht eine Anrufzuschaltnachricht ist.

5. Plattformübergreifendes Überwachungsverfahren eines Kundendienstsystems, umfassend:
A. Registrieren der CTI der Plattform, zu welcher der Überwachungsagent gehört beziehungsweise der CTI der Plattform, zu welcher der überwachte Agent gehört bei der Übertragungsschnittstellenvorrichtung und Herstellen einer Verbindung zwischen der Übertragungsschnittstellenvorrichtung und jeweils den CTIs; Senden (Schritt 41) einer Überwachungsanfragenachricht von einem Überwachungsagent zu einer Übertragungsschnittstellenvorrichtung durch eine Computer-Telekommunikation-Integration (CTI) einer Plattform, zu welcher der Überwachungsagent selbst gehört;
B. Konvertieren (Schritt 43) der Überwachungsanfragenachricht in ein Format, welches für die CTI der zweiten Plattform zulässig ist und Weiterleiten der verarbeiteten Überwachungsanfragenachricht an eine CTI einer Plattform, zu welcher der überwachte Agent gehört durch die Übertragungsschnittstellenvorrichtung, wobei der Überwachungsagent und der überwachte Agent zu unterschiedlichen Anrufsteuerplattformen gehören; Aufrufen (Schritt 44) des Überwachungsagent durch die CTI der Plattform, zu welcher der überwachte Agent gehört; und
nachdem der Anruf gelingt, Zurücksenden einer Anruferfolgsnachricht durch den Überwachungsagent an die CTI der Plattform, zu welcher der überwachte Agent gehört und Herstellen (Schritt 45) eines Überwachungskanals zwischen dem Überwachungsagent und dem überwachten Agent;
C. Zuschalten (Schritt 48) einer aktuellen Unterhaltung, welche durch den überwachten Agent durch den Überwachungsagent gehalten wird, nachdem die CTI der Plattform, zu welcher der Überwachungsagent gehört eine Überwachungsantwortnachricht empfängt, welche durch die CTI der Plattform gesendet wurde, zu welcher der überwachte Agent gehört und welche durch die Übertragungsschnittstellenvorrichtung weitergeleitet wurde.

6. Verfahren nach Anspruch 5, wobei die Verbindung zwischen der Übertragungsschnittstellenvorrichtung und der CTI, zu welcher der Überwachungsagent gehört oder der CTI, zu welcher der überwachte Agent gehört in einem normalen Zustand durch eine Handshake-Nachricht sichergestellt wird.

7. Verfahren nach Anspruch 5, wobei der Vorgang des Aufrufens des Überwachungsagent durch die CTI der Plattform, zu welcher der überwachte Agent gehört, insbesondere umfasst:
Kommunizieren (Schritt 34 (1)) mit einem Kernnetzwerk und Anfragen, den Überwachungsagent durch die CTI der Plattform aufzurufen, zu welcher der überwachte Agent gehört, gemäß eines Zugangscodes der Plattform, zu welcher der Überwachungsagent gehört;
Übertragen (Schritt 34 (2)) des Anrufs an die CTI der Plattform, zu welcher der Überwachungsagent gehört, nach einer Zahlenanalyse durch das Kernnetzwerk; und
Aufrufen (Schritt 34 (3)) des Überwachungsagent durch die CTI der Plattform, zu welcher der Überwachungsagent gehört, gemäß der Anforderung der CTI der Plattform, zu welcher der überwachte Agent gehört.

8. Verfahren nach Anspruch 5, wobei der Vorgang des Aufrufens des Überwachungsagent durch die CTI der Plattform, zu welcher der überwachte Agent gehört, insbesondere umfasst:
direktes Aufrufen des Überwachungsagent durch die CTI der Plattform, zu welcher der überwachte Agent gehört, gemäß der Adress-Port-Angabe des Überwachungsagent, welche in der Überwachungsanfragenachricht enthalten ist.

9. Verfahren nach Anspruch 5, wobei die Überwachungsanfragenachricht eine Anrufzuschaltnachricht ist.

## Revendications

1. Système de service client, comprenant : un agent de surveillance, un dispositif d'interface de transfert et un agent surveillé, l'agent de surveillance et l'agent surveillé appartenant à des plates-formes de commande d'appels différentes, dans lequel
l'agent de surveillance est agencé pour envoyer (étape 41) un message de demande de surveillance au dispositif d'interface de transfert par l'intermédiaire d'une Intégration de télécommunication informatique (CTI) d'une plate-forme à laquelle appartient l'agent de surveillance lui-même et intervenir (étape 48) dans une conversation en cours qui est tenue par l'agent surveillé après que la CTI de la plate-forme à laquelle appartient l'agent de surveillance lui-même reçoit un message de réponse de surveillance envoyé depuis une CTI d'une plate-forme à laquelle appartient l'agent surveillé ;
le dispositif d'interface de transfert est agencé pour convertir (étape 43) le message de demande de surveillance reçu dans un format acceptable pour la CTI de la seconde plate-forme, réacheminer (étape 43) le message de demande de surveillance converti vers la CTI de la plate-forme à laquelle appartient l'agent surveillé, et réacheminer le message de réponse de surveillance envoyé depuis la CTI de la plate-forme à laquelle appartient l'agent surveillé vers la CTI de la plate-forme à laquelle appartient l'agent de surveillance ; et
l'agent surveillé est agencé pour recevoir le message de demande de surveillance provenant de l'agent de surveillance à partir du dispositif d'interface de transfert par l'intermédiaire de la CTI de la plate-forme à laquelle appartient l'agent surveillé lui-même et retourner le message de réponse de surveillance au dispositif d'interface de transfert ;
dans lequel l'agent de surveillance et l'agent surveillé sont en outre agencés pour être enregistrés sur le dispositif d'interface de transfert par l'intermédiaire des CTI des plates-formes auxquelles appartiennent respectivement l'agent de surveillance et l'agent surveillé et établir une liaison respectivement avec le dispositif d'interface de transfert avant que l'agent de surveillance n'envoie le message de demande de surveillance ; et la CTI de la plate-forme à laquelle appartient l'agent surveillé lui-même initiant (étape 44) un appel vers l'agent de surveillance par l'intermédiaire d'un processus qui simule le processus selon lequel un utilisateur externe effectue un appel après que l'agent de surveillance envoie le message de demande de surveillance.

2. Système de service client selon la revendication 1, dans lequel le dispositif d'interface de transfert comprend un module d'interface de message et un module de traitement, dans lequel
le module d'interface de message est agencé pour recevoir (étape 42) le message de demande de surveillance en provenance de l'agent de surveillance envoyé par l'intermédiaire de la CTI de la plate-forme à laquelle appartient l'agent de surveillance lui-même, envoyer le message de demande de surveillance reçu au module de traitement, réacheminer (étape 43) le message de demande de surveillance traité par le module de traitement vers la CTI de la plate-forme à laquelle appartient l'agent surveillé, et réacheminer le message de réponse de surveillance envoyé par la CTI de la plate-forme à laquelle appartient l'agent surveillé vers la CTI de la plate-forme à laquelle appartient l'agent de surveillance ; et
le module de traitement est agencé pour convertir (étape 43) le message de demande de surveillance reçu dans un format acceptable pour la CTI de la seconde plate-forme et envoyer le message de demande de surveillance converti au module d'interface de message.

3. Système de service client selon la revendication 1, dans lequel la liaison entre le dispositif d'interface de transfert et la CTI de la plate-forme à laquelle appartient l'agent de surveillance ou la CTI de la plate-forme à laquelle appartient l'agent surveillé est garantie dans un état normal par l'intermédiaire d'un message d'établissement de liaison.

4. Système de service client selon la revendication 1 ou 2, dans lequelle le message de demande de surveillance est un appel de message de demande d'intervention.

5. Procédé de surveillance multiplate-forme d'un système de service client, comprenant :
A. l'enregistrement de la CTI de la plate-forme à laquelle appartient l'agent de surveillance et de la CTI de la plate-forme à laquelle appartient l'agent surveillé respectivement sur le dispositif d'interface de transfert et l'établissement d'une liaison entre le dispositif d'interface de transfert et les CTI respectivement; l'envoi (étape 41) d'un message de demande de surveillance d'un agent de surveillance à un dispositif d'interface de transfert par l'intermédiaire d'une Intégration de télécommunication informatique (CTI) d'une plate-forme à laquelle appartient l'agent de surveillance lui-même ;
B. la conversion (étape 43) du message de demande de surveillance dans un format acceptable pour la CTI de la seconde plate-forme et le réacheminement du message de demande de surveillance traité vers une CTI de la plate-forme à laquelle appartient l'agent surveillé par le dispositif d'interface de transfert, l'agent de surveillance et l'agent surveillé appartenant à des plates-formes de commande d'appel différentes ; l'appel (étape 44) de l'agent de surveillance par la CTI de la plate-forme à laquelle appartient l'agent surveillé ; et
après que l'appel aboutit, le retour d'un message d'aboutissement d'appel par l'agent de surveillance à la CTI de la plate-forme à laquelle appartient l'agent surveillé, et l'établissement (étape 45) d'un canal de surveillance entre l'agent de surveillance et l'agent surveillé ;
C. l'intervention (étape 48) dans une conversion en cours qui est tenue par l'agent surveillé par l'agent de surveillance après que la CTI de la plate-forme à laquelle appartient l'agent de surveillance reçoit un message de réponse de surveillance envoyé par la CTI de la plate-forme à laquelle appartient l'agent surveillé et réacheminé par le dispositif d'interface de transfert.

6. Procédé selon la revendication 5, dans lequel la liaison entre le dispositif d'interface de transfert et la CTI à laquelle appartient l'agent de surveillance ou la CTI à laquelle appartient l'agent surveillé est garantie dans un état normal par l'intermédiaire d'un message d'établissement de liaison.

7. Procédé selon la revendication 5, dans lequel le processus d'appel de l'agent de surveillance par la CTI de la plate-forme à laquelle appartient l'agent surveillé comprend spécifiquement :
la communication (étape 34(1)) avec un réseau coeur et le fait de requérir d'appeler l'agent de surveillance par la CTI de la plate-forme à laquelle appartient l'agent surveillé selon un code d'accès de la plate-forme à laquelle appartient l'agent de surveillance ;
le transfert (étape 34 (2)) de l'appel vers la CTI de la plate-forme à laquelle appartient l'agent de surveillance après analyse du numéro par le réseau coeur ; et
l'appel (étape 34 (3)) de l'agent de surveillance par la CTI de la plate-forme à laquelle appartient l'agent de surveillance selon l'exigence de la CTI de la plate-forme à laquelle appartient l'agent surveillé.

8. Procédé selon la revendication 5, dans lequel le processus d'appel de l'agent de surveillance par la CTI de la plate-forme à laquelle appartient l'agent surveillé comprend spécifiquement :
l'appel direct de l'agent de surveillance par la CTI de la plate-forme à laquelle appartient l'agent surveillé selon des informations de port d'adresse de l'agent de surveillance contenues dans le message de demande de surveillance.

9. Procédé selon la revendication 5, dans lequel le message de demande de surveillance est un appel de message de demande d'intervention.
